# EUROPÄISCHE PATENTSCHRIFT

(11) **EP 2 269 246 B1**
(45) Veröffentlichungstag und Bekanntmachung des Hinweises auf die Patenterteilung: **07.08.2013**
(21) Anmeldenummer: 08874041.0
(22) Anmeldetag: 04.12.2008
(51) Int. Cl.: H01M 2/02, H01M 2/10, H01M 10/052

(54) **ENERGIESPEICHERMODUL SOWIE ELEKTROWERKZEUG MIT MINDESTENS EINEM ENERGIESPEICHERMODUL**
ENERGY STORAGE MODULE AND POWER TOOL COMPRISING AT LEAST ONE ENERGY STORAGE MODULE
MODULE ACCUMULATEUR D'ÉNERGIE ET OUTIL ÉLECTRIQUE ÉQUIPÉ D'AU MOINS UN MODULE ACCUMULATEUR D'ÉNERGIE

(30) Priorität: 21.04.2008 DE 102008001286
(43) Veröffentlichungstag der Anmeldung: 05.01.2011
(73) Patentinhaber: Robert Bosch GmbH, 70442 Stuttgart (DE)
(72) Erfinder: DOEGE, Volker, 89561 Dischingen (DE); LIEBENOW, Cornelius, 70771 Leinfelden-Echterdingen (DE); GLAUNING, Rainer, 72631 Aichtal-Groetzingen (DE)
(86) Internationale Anmeldenummer: PCT/EP2008/066790
(87) Internationale Veröffentlichungsnummer: WO 2009/129872

(56) Entgegenhaltungen:
- EP-A- 0 055 888
- EP-A2- 0 845 821
- WO-A-89/03596
- WO-A-92/10858
- WO-A2-00/41252
- US-A- 4 505 996
- US-A- 5 531 601
- US-A- 5 882 362

## Beschreibung

### Stand der Technik

Die Erfindung geht aus von einem Energiespeichermodul sowie einem Elektrowerkzeug mit mindestens einem Energiespeichermodul nach den Oberbegriffen der unabhängigen Ansprüche.

Vom Markt her bekannte Batterien für netzunabhängige Elektrowerkzeuge (cordless Power tools) enthalten als Energiespeicher elektrochemische Speicherzellen mit runder Bauform, die einen starren und stabilen Metallbecher, der auch einen der beiden elektrischen Pole der Zelle darstellt, aufweisen. In der Regel sind dies NiCd-, NiMH- oder Lithiumionen-Zellen. Diese Zellen enthalten in dem Metallbecher neben den zur Energiespeicherung notwendigen Komponenten oft weitere Schutzbauteile, welche die Sicherheit der Zelle bei Überladung oder Kurzschluss sowie bei Einwirkung hoher Temperaturen bewirken sollen. Üblich sind hier Sicherheitsventile und Stromunterbrechungsbauteile, so genannte "Current-Interruption-Devices".

Weiterhin enthalten bekannte Batteriepacks für Elektrowerkzeuge außerhalb der Zellen zusätzliche Sicherheitselemente, beispielsweise Sicherungen oder elektronische Schutzbeschaltungen, Zellverbinder, Kontaktflächen, Isolationsmaterialien sowie geeignet geformte Teile, die die runden Zellen in der vorgesehenen Position innerhalb der meist eher quaderförmigen Batteriepacks fixieren.

Bei der bekannten Verwendung von kreisrunden Zellen ist der zur Verfügung stehende Raum im Batterie-Pack nicht vollständig ausgenutzt. Da jede Zelle für sich Schutzbauteile enthält, erhöht sich somit der Platzbedarf pro verwendete Zelle und die Gesamtmasse des Batterie-Packs. Da die runden Zellen für sich abermals mit einer Halterung im Batterie-Pack fixiert werden müssen, ist neben der schweren Metallverpackung der einzelnen Zellen nochmals ein Bauteil notwendig, das die Zellen teilweise einfasst und die Gesamtmasse des Batterie-Packs weiter erhöht. Der erhöhte Volumen- und Materialbedarf führt zu einer deutlichen Verringerung der volumetrischen und spezifischen Energiedichte der bekannten Batterie-Packs gegenüber den durch die einzelnen Zellen vorgegebenen Werten.

Die US 5 882 362 A betrifft eine elektrochemische Lithiumspeicherzelle, bei der ein Anoden-Kathoden-Zellenelement in einem Beutel aus Polypropylen oder Polyethylen verpackt wird.

Daneben geht aus der EP 0 055 888 A eine Bleisäurebatterie in Form eines Batterie-Packs hervor, bei der die einzelnen Speicherzellen durch flexible Polymerbeutel umhüllt sind, wodurch eine kompakte Batterie bereitgestellt wird.

Nach der WO 92/10858 A können einzelne elektrochemische Speicherzellen mittels eines Plastikbeutels als flexible Zellenhülle umhüllt, und durch Eintauchen in ein säurebeständiges und später aushärtendes Material als Zellenbehälter gekapselt und zu einer Batterie zusammengefasst und verschaltet werden. Die Speicherzellen sind insbesondere Metall-Säure-Speicherzellen.

Die WO 89/03596 A offenbart eine Alkaline-Speicherzelle mit zwei pastenartigen und mittels eines Beutels verschlossenen Elektroden zwischen denen ein Dielektrikum angeordnet ist, wobei die Zelle mittels einer flexiblen Zellenhülle 9 umhüllt ist.

Ebenso geht aus der US 4 505 996 A eine gattungsähnliche Speicherzelle mit einer flexiblen, in sich nicht formstabilen Zellenhülle hervor.

Aus der WO 00/41252 A geht ein Verfahren zur Herstellung einer Kette von Lithium-Ionen-Zellen mit einem gelartigen Polymerelektrolyt hervor. Die Kette von Zellen ist in einem flexiblen Verschlussmaterial, beispielsweise einem flexiblen Schlauch eingebettet, wobei die Zellen gefaltet angeordnet werden können.

Schließlich beschreibt die EP 0 845 821 A2 eine Lithium-Ionen-Batterie, die in einem laminierten luftdichten Mantel mit überlappender Mantelfläche angeordnet ist, wobei Elektrodenanschlussleitungen durch einen Fortsatz des Mantels geführt sind, wobei die Anschlussleitungen durch den Fortsatz gecrimpt luftdicht geführt sind.

Die Aufgabe der Erfindung besteht darin, ein Energiespeichermodul zu gestalten, das ein optimales Verhältnis von Volumen, Gewicht und/oder Material/Bauteilbedarf zu der mit dem Energiespeichermodul speicherbaren Energie aufweist und das möglichst sicher ist.

### Offenbarune der Erfindung

Die Erfindung geht aus von einem Batterie-Pack zur Stromversorgung eines Elektrowerkzeuges, mit einer Mehrzahl von elektrisch miteinander verschalteten Zellen zur Energiespeicherung. Es wird vorgeschlagen, dass die Zellen weiche elektrochemische Polymerzellen, insbesondere Lithium-Ionen-Polymerzellen oder Lithium-Polymerzellen mit flexiblen Zellenhüllen sind. Die Zellenhüllen sind in sich nicht formstabil. Der Verzicht auf Metall-Zellbecher und diverse Sicherheitselemente für jede einzelne Zelle führt im Vergleich zu bekannten Energiespeichermodulen zu einer Einsparung an Gewicht und Material im Verhältnis zu gespeicherter Energie. Außerdem können Speicherzellen ohne festen Mantel einfach flachen Form, insbesondere quaderförmig, aufgebaut werden. Mit quaderförmigen oder annähernd quaderförmigen Zellen wird der zur Verfügung stehende Raum im Energiespeichermodul besser ausgenutzt als mit runden Zellen. So ist ein platzsparender Aufbau eines quaderförmigen Energiespeichermoduls mit minimalen Zwischenräumen möglich, ohne dessen Funktion zu beeinträchtigen. Die Zellen können über elektrische Kontakte, die gegebenenfalls durch Wände von etwaigen Zellengehäusen führen, mit einem Verbraucher, insbesondere dem Elektrowerkzeug, oder mit einem Ladegerät elektrische Energie austauschen.

Bei einer vorteilhaften Ausführungsform können die Zellen stapelweise angeordnet und in Serie oder parallel oder als Kombination von Serien- und Parallelschaltungen geschaltet sein. Zellenstapel können einfach und platzsparend in einem quaderförmigen Gehäuse des Energiespeichermoduls untergebracht werden.

Erfindungsgemäß sind die Zellen Polymerzellen, insbesondere Lithiumionen-Polymerzellen oder Lithium-Polymerzellen. Denkbar sind vorteilhafterweise auch Zellen, bei denen ein Elektrodenstapel oder ein Elektrodenwickel mit einem Separator versehen ist, der von einer Elektrolytlösung getränkt ist und mit einem flexiblen, nichtstarren Material gasdicht eingepackt ist.

Erfindungsgemäß sind die Zellen einzeln oder in Gruppen in einem festen, vorzugsweise quaderförmigen Zellenbehälter oder einem offenen Mantel angeordnet. Der Zellenbehälter fixiert auf diese Weise die Zellen in einer definierten Position zueinander, etwa durch Einbau von Einzelfächern für jeweils eine oder mehrere Zellen. Außerdem umgibt der Zellenbehälter die Zellen beziehungsweise den Zellenstapel vollständig und trennt ihn gegenüber der Umwelt hinreichend gasdicht ab. Der Zellenbehälter mit den darin fixierten Zellen kann einfach dann in das Energiespeichermodul eingebaut und verschaltet werden. Der Zellenbehälter kann aus Metall oder Kunststoff oder einer Kombination aus Metall und Kunststoff sein. Eine Wand des Zellenbehälters kann Durchführungen für die elektrischen Kontakte der Zellen für den Verbraucher oder das Ladegerät haben. Ein offener Mantel ist leichter als ein geschlossener Zellenbehälter und benötigt keine Durchführungen für die elektrischen Kontakte. Es können mehrere Zellenbehälter zu einem Modulgehäuse des Energiespeichermoduls zusammengefasst sein.

Der Zellenbehälter kann vorteilhafterweise wenigstens zu einem Teil aus einem insbesondere brandhemmenden und hitzebeständigen Kunststoff sein. Kunststoffgehäuse sind leicht, einfach herstellbar und in der Regel elektrisch isolierend.

Erfindungsgemäß weist der Zellenbehälter wenigstens ein Überdruckschutzmittel, insbesondere ein Überdruckventil und/oder eine Sollbruchstelle, auf. Auf diese Weise kann sich ein Überdruck im Zellenbehälter, der beispielsweise durch Überhitzung entstehen kann, kontrolliert abbauen und die Explosionsgefahr wird verringert.

Bei einer weiteren vorteilhaften Ausführungsform kann der Zellenbehälter wenigstens ein elektrisches/elektronisches Schutzmittel, insbesondere einen Temperatursensor und/oder eine Stromunterbrechungseinheit, vorzugsweise eine Sicherung, aufweisen. Mit dem elektrischen/elektronischen Schutzmittel ist wie mit dem Überdruckschutzmittel eine optimale Absicherung des Energiespeichermoduls bei Betriebszuständen realisierbar, von denen Gefahren insbesondere für einen Anwender ausgehen können. Derart gefährliche Betriebszustände sind insbesondere eine Überladung der Zellen, sowie eine Entladung des Energiespeichermoduls mit einem zu hohen Strom. Weiterhin stellen die Schutzmittel einen Schutz vor einer übermäßigen Belastung der im Energiespeichermodul befindlichen Zellen und die damit verbundene raschere Alterung des Energiespeichermoduls dar. Die Schutzmittel stellen insbesondere einen Schutz vor der Entnahme von übermäßig großen Strömen dar. Sie sind ebenfalls ein Schutz des Energiespeichermoduls vor einem Betrieb bei zu hohen (Umgebungs-) Temperaturen. Außerdem kann beim Auftreten von übermäßiger Wärme im Zellenbehälter, insbesondere durch Wärmeabgabe von den Zellen, der Stromfluss in die Zellen hinein beziehungsweise aus den Zellen heraus mit den Schutzmitteln unterbunden werden .

Erfindungsgemäß weist der Zellenbehälter wenigstens ein elektrisches/elektronisches Schutzmittel und wenigstens ein Überdruckschutzmittel auf, die funktionell zusammenwirken. Auf diese Weise kann beim Auslösen des Überdruckschutzmittels gleichzeitig auch mit dem elektrischen/elektronischen Schutzmittel der Stromfluss unterbrochen werden. Dies erhöht die Sicherheit des Energiespeichermoduls deutlich.

Ein erfindungsgemäßes Elektrowerkzeug weist mindestens einen solchen Batterie-Pack zur Stromversorgung eines Elektrowerkzeuges, mit einer Mehrzahl von Zellen auf, wobei die Zellen weiche elektrochemische Polymerzellen, insbesondere Lithiumionen-Polymerzellen oder Lithium-Polymerzellen mit flexiblen, in sich nicht formstabilen Zellenhüllen sind. Die Zellen sind Polymerzellen, die sich einfach quaderförmig oder in einer annähernd quaderförmigen Form aufbauen lassen, was sich positiv auf das Verhältnis Volumen/Gewicht zu der mit dem Energiespeichermodul speicherbaren Energie auswirkt.

### Kurze Beschreibung der Zeichnungen

### Zeichnung

Weitere Vorteile ergeben sich aus der folgenden Zeichnungsbeschreibung. In der Zeichnung sind Ausführungsbeispiele der Erfindung dargestellt. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen.

Es zeigen:
- Figur 1: schematisch eine isometrische Darstellung eines Batterie-Packs mit drei quaderförmigen Polymerzellen jeweils in einem Zellenbehälters gemäß einem ersten Ausführungsbeispiel;
- Figur 2: schematisch eine isometrische Darstellung einer der Zellenbehälters mit Polymerzelle aus der Figur 1;
- Figur 3: schematisch eine Seitenansicht des Zellenbehälters mit der Polymerzelle aus der Figur 2;
- Figur 4: schematisch eine Draufsicht mit Teilschnitt des Zellenbehälters mit der Polymerzelle aus den Figuren 2 und 3;
- Figur 5: schematisch eine isometrische Darstellung eines zu dem aus der Figur 1 ähnlichen Batterie-Packs mit sechs quaderförmigen Polymerzellen in zwei Zellenbehältern gemäß einem zweiten Ausführungsbeispiel;
- Figur 6: schematisch eine isometrische Darstellung einer der Zellenbehälter mit drei Polymerzellen aus der Figur 5.

### Ausführungsform der Erfindung

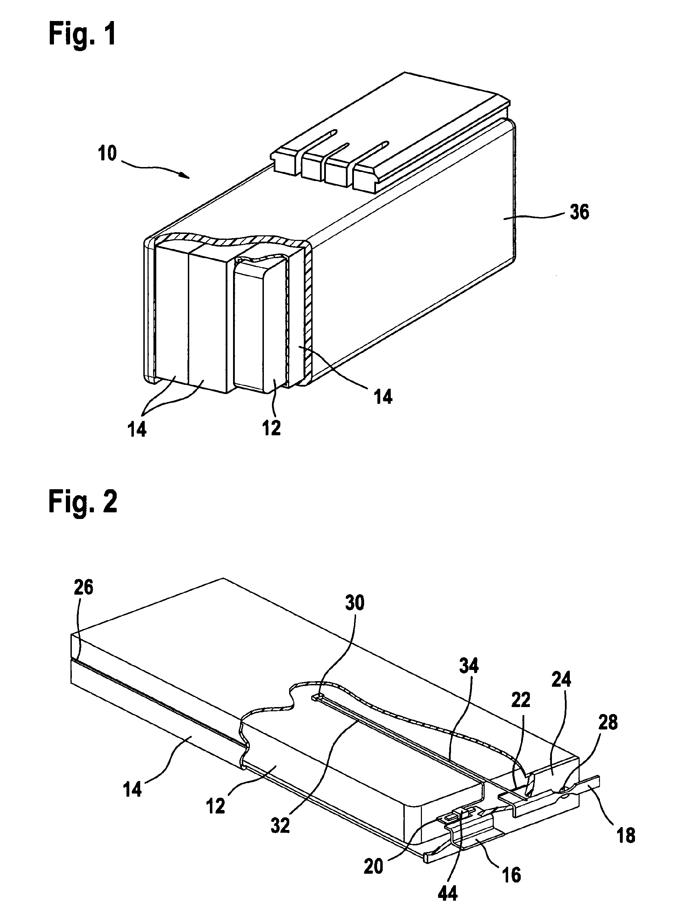

In der Figur 1 ist ein erstes Ausführungsbeispiel eines Energiespeichermoduls in Form eines Batterie-Packs 10 zur Stromversorgung eines nicht gezeigten vorzugsweise netzunabhängigen Elektrowerkzeuges dargestellt.

Dieser Batterie-Pack 10 weist zur Energiespeicherung drei elektrisch miteinander verschaltete quaderförmige Lithiumionen-Zellen oder Lithiumzellen (im folgenden kurz als Polymerzelle 12 bezeichnet) auf, die in der so genannten Polymer-Technik, beispielsweise als Pouch-Zelle, laminated type oder Lithium(ionen)-Polymerzelle, aufgebaut sind und nicht mit einem starren (Metall)mantel umgeben sind, wie herkömmliche Lithium(ionen)zellen, sondern mit einer flexiblen, weichen, in sich nicht formstabilen Zellenhülle.

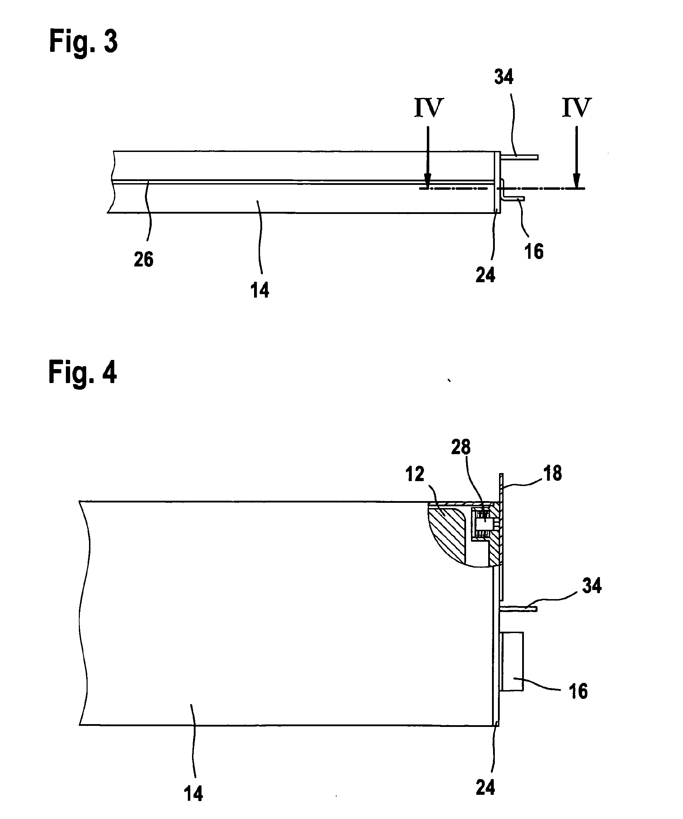

Die weichen Polymerzellen 12 sind in weiter unten näher erläuterten formstabilen Zellenbehältern 14 angeordnet, von denen eine mit der enthaltenen Polymerzelle 12 in den Figuren 2 bis 4 im Detail gezeigt ist.

Jede Polymerzelle 12 weist vorzugsweise eine in den Figuren 1 bis 4 verdeckte positive Elektrode auf, die reine oder gemischte Oxide von Nickel, Kobalt, Mangan oder auch Übergangsmetall-Phosphate, beispielsweise Eisen-, Mangan- oder Kobalt-Phosphate, oder Mischungen der beiden Stoffklassen enthält. Eine negative Elektrode der Polymerzelle 12 enthält entweder Stoffe, die bei der Ladung der Polymerzelle 12 Lithiumionen einlagern können, beispielsweise Kohlenstoffmaterialien oder spezielle Legierungen, oder metallisches Lithium oder Legierungen desselben.

Die Polymerzellen 12 können sowohl in Serie als auch parallel miteinander verschaltet sein, es kann auch eine Kombination von paralleler und serieller Verschaltung realisiert werden.

Die Polymerzellen 12 sind einzeln jeweils in einem der formstabilen Zellenbehälter 14 eingebaut. Die Zellenbehälter 14 sind aus einem Kunststoff, der brandhemmend und hitzebeständig ist. Der Zellenbehälter 14 umgibt die Polymerzelle 12 vollständig und trennt sie gegenüber der Umwelt hinreichend gasdicht ab.

Zwei Anschlusskontakte 16 und 18 führen auf einer Anschlussseite des Zellenbehälters 14, in den Figuren 2 bis 4 rechts, von jeweiligen

Elektrodenpolen 20 und 22 der Polymerzelle 12 durch einen Deckel 24 des Zellenbehälters 14 hindurch zur Außenseite des Zellenbehälters 14. In der Figur 1 sind nur die den Anschlussseiten der Zellenbehälter 14 gegenüberliegenden Rückseiten sichtbar.

Zwischen einem der Elektrodenpole 20 der Polymerzelle 12 und dem entsprechenden, in der Figur 2 linken Anschlusskontakt 16 ist eine Sicherung 44 zur Unterbrechung der elektrischen Verbindung angeordnet.

Der Zellenbehälter 14 enthält eine geeignete Sollbruchstelle 26 in Form einer Verjüngung im Zellenbehältermaterial, die bei einem übermäßigen Druckanstieg innerhalb des Zellenbehälters 14 bersten kann. Damit ist bei Überschreiten eines bestimmten Innendrucks innerhalb des Zellenbehälters 14 ein Öffnen des Zellenbehälters 14 an dieser Sollbruchstelle 26 sichergestellt.

Weiterhin ist der Zellenbehälter 14 mit einem reversibel öffnenden, federvorgespannten Überdruckventil 28 ausgestattet, das bereits bei geringen Innendrücken innerhalb des Zellenbehälters 14 anspricht.

Im Zellenbehälter 14 ist ferner ein Temperaturfühler 30 mit negativem Temperatur Koeffizient (NTC) enthalten. Der Temperaturfühler 30 befindet sich zwischen einer großen Fläche des Zellen behälters 14 und der Polymerzelle 12. Er ist über eine erste Anschlussleitung 32 mit dem dem Elektrodenpol 20 der Polymerzelle 12 abgewandten Anschluss der Sicherung 44 verbunden. Eine zweite Anschlussleitung 34 führt durch den Deckel 24 des Zellenbehälters 14 hindurch und bildet an der Außenseite des Zellenbehälters 14 einen Temperatursensorkontakt. Optional kann eine Vertiefung (nicht dargestellt) in der Behälterwand den Temperaturfühler 30 aufnehmen, so dass er gegen Verrutschen gesichert ist und keinen punktförmigen Druck auf die Polymerzelle 12 ausübt.

Der Temperatursensorkontakt seinerseits ist mit einer nicht gezeigten, im Batterie-Pack 10 integrierten elektronischen Schaltung verbunden, mit der der Widerstandswert des Temperaturfühlers 30 erfasst werden kann.

Drei solcher Zellenbehälter 14 mit darin fixierten Polymerzellen 12 sind wiederum Bestandteil des kompletten Batterie-Packs 10 und sind hierzu in einem quaderförmigen Modulgehäuse 36 des Batterie-Packs 10 eingebaut und verschaltet (Figur 1). Die drei Zellenbehälter 14 sind derart in einer Reihe gestapelt, dass ihre großen Flächen einander zugewandt sind.

Der Batterie-Pack 10 enthält neben den mit den Polymerzellen 12 befüllten Zellenbehältern 14 weitere in der Figur 1 nicht gezeigte mechanische und elektrisch wirksame Komponenten, beispielsweise elektrische Kontakte, Kabel, Isolationsmaterial oder dergleichen, oder auch eine elektronische Schutzbeschaltung.

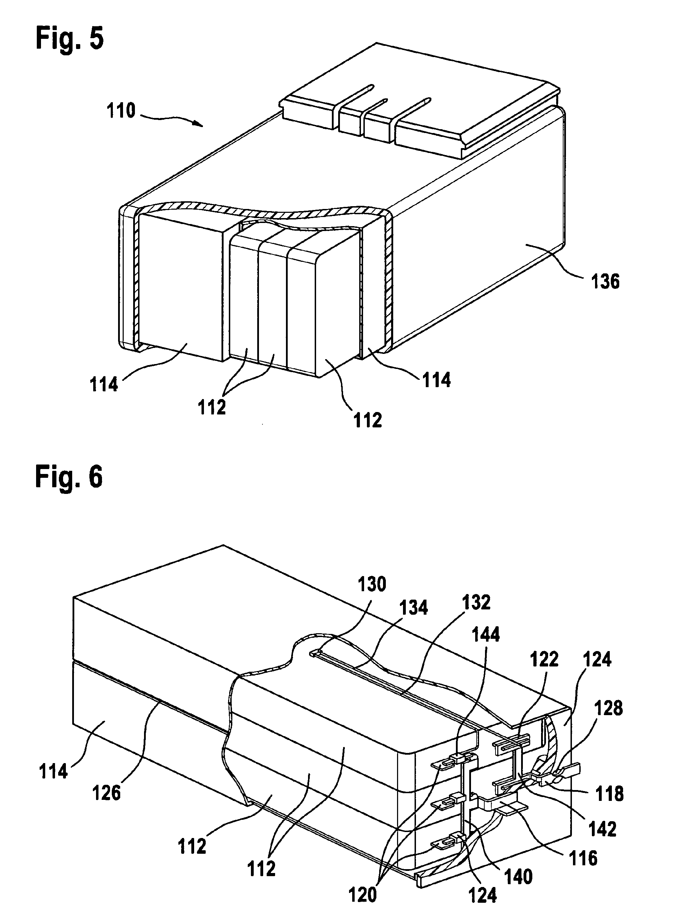

Bei einem zweiten Ausführungsbeispiel, dargestellt in den Figuren 5 und 6, sind diejenigen Elemente, die zu denen des ersten, in den Figuren 1 bis 4 beschriebenen Ausführungsbeispiels ähnlich sind, mit denselben Bezugszeichen zuzüglich 100 versehen, so dass bezüglich deren Beschreibung auf die Ausführungen zum ersten Ausführungsbeispiel Bezug genommen wird. Dieses Ausführungsbeispiel unterscheidet sich von ersten dadurch, dass in jedem Zellenbehälter 114 drei elektrisch parallel geschaltete Polymerzellen 112 derart in einer Reihe gestapelt sind, dass die großen Flächen der Polymerzellen 112 einander zugewandt sind. Beispielhaft sind zwei derartige Zellenbehälter 114 in einem Modulgehäuse 136 eines Energiespeichermoduls zusammengefasst.

Der Zellenbehälter 114 fixiert die Polymerzellen 112 in einer definiertem Position zueinander. Der Zellenbehälter 114 umgibt den Zellenstapel der Polymerzellen 114 vollständig und trennt den Zellenstapel gegenüber der Umwelt hinreichend gasdicht ab.

Die elektrische Verbindung der Elektrodenpole 120 und 122 der einzelnen Polymerzellen 112 untereinander wird über Brücken 140 und 142 innerhalb des Zellenbehälters 114 durchgeführt. Zwischen jeweils einem der Elektrodenpole 120 jeder Polymerzellen 112 und der entsprechenden Brücke 140, in der Figur 6 links, ist eine Sicherung 144 zur Unterbrechung der elektrischen Verbindung angeordnet.

Von den Brücken 140 und 142 führt der jeweilige Anschlusskontakt 116 beziehungsweise 118 durch den Deckel 124 hindurch zur Außenseite des Zellenbehälters 114.

In einer nicht gezeigten dritten Variante der Erfindung kann statt des Zellenbehälter s14; 114 auch eine Fixierung der Polymerzellen 12; 112 in einem Metall- oder Kunststoffmantel realisiert werden, der die Polymerzelle 12; 112 beziehungsweise den Zellenstapel nur teilweise umschließt und die Polymerzellen 12; 112 nicht gasdicht gegenüber der Umwelt isoliert. Auch in diesem Falle wird das Polymerzellenensemble, bestehend aus den Polymerzellen 12; 112 und dem zu ihrer Fixierung und brandhemmenden Abschirmung verwendeten Metall- oder Kunststoffmantel in einen aus weiteren Bauteilen aufgebauten Batterie-Pack 10; 110 eingebaut.

Bei allen oben beschriebenen Ausführungsbeispielen eines Batterie-Packs 10; 110 sind unter anderem folgende Modifikationen möglich:
Die Polymerzellen 12; 112 können statt Lithium(ionen)zellen auch andersartige elektrochemische Speicherzellen ohne starren Zellenbehälter sein.

Die Polymerzellen 12; 112 können statt quaderförmig auch andersartig, beispielsweise mit dreieckiger oder anderer polygoner Grundfläche und Deckfläche, aufgebaut sein.

Es können auch zwei oder mehr als drei Polymerzellen 12; 112 in einem Zellenbehälter 14; 114 und/oder weniger als zwei oder mehr als drei Zellenbehältern 14; 114 mit Polymerzellen 12; 112 in einem Batterie-Pack 10; 110 zusammengefasst sein.

Insbesondere beim zweiten Ausführungsbeispiel kann die elektrische Verbindung der einzelnen Polymerzellen 112 untereinander statt innerhalb des Zellenbehälters 114 auch außerhalb des Zellenbehälters 114 durchgeführt werden.

Insbesondere beim zweiten Ausführungsbeispiel können die Polymerzellen 112 durch Einbau von Einzelfächern für jeweils beispielsweise eine oder zwei Polymerzellen 112 im Zellenbehälter 114 in einer definiertem Position zueinander fixiert sein.

Die Zellenbehälter 14; 114 können statt aus Kunststoff auch aus Metall sein. Im Falle des Aufbaus des Zellenbehälters 14; 114 aus einem metallischen Werkstoff kann dieser mit einer isolierenden Schicht aus einem Kunststoffmaterial überzogen sein.

Bei Zellenbehältern 14; 114 aus Kunststoff kann der Kunststoff zur Verbesserung der mechanischen Stabilität durch den Einbau von Metallkomponenten verstärkt sein. Diese Komponenten können so gestaltet werden, dass sie das Eindringen spitzer Gegenstände erschweren oder gar verhindern. Ebenfalls ist es möglich, dem Kunststoff Zusätze metallischer oder nichtmetallischer Art hinzu zusetzen, die die thermische Leitfähigkeit des Kunststoffs verbessern.

Die Zellenbehälter 14; 114 aus Kunststoff können zusätzlich oder alternativ auch einen Zusatz von brandhemmenden Bestandteilen haben.

Die Sollbruchstellen 26; 126 der Zellenbehälter 14; 114 können auch mehrere Verjüngungen aufweisen.

Jeder Zellenbehälter 14; 114 kann statt mit dem Federvorgespannten reversibel öffnenden Überdruckventil 28; 128 auch mit einem anderen, auch irreversibel öffnenden Überdruckventil ausgestattet sein.

Jeder Zellenbehälter 14; 114 kann mit weiteren Sicherheitselementen wie etwa einem stromunterbrechenden Bauteil ausgestattet sein, die in bestimmten sicherheitskritischen Situationen, beispielsweise bei einem zu hohem Strom, insbesondere einem Kurzschlussstrom, oder beim Auftreten hoher Temperaturen, den Stromfluss durch die Polymerzellen 12; 112 unterbindet.

Das Eintreten des Öffnens der Sollbruchstelle 26; 126 des Zellenbehälters 14; 114 kann durch geeignete konstruktive Maßnahmen und Leitungsführung mit einer Unterbrechung der Stromzufuhr zum Batterie-Pack 10; 110 kombiniert sein. Beispielsweise kann eine elektrische Zuleitung oder eine Ableitung in die Sollbruchstelle 26; 126 der Zellengehäusewand integriert oder dort fixiert sein, die beim Bersten der Sollbruchstelle 26; 126 reißt und so die elektrische Verbindung an dieser Stelle trennt.

Der Widerstandswert des Temperaturfühlers 30; 130 kann statt mit der im Batterie-Pack 10; 110 integrierten elektronischen Schaltung auch über einen entsprechenden Kontakt am Batterie-Pack 10; 110 von einer Elektronik eines kontaktierten Ladegerätes und/oder des Elektrowerkzeugs erfasst werden. Zusätzlich oder alternativ zu den Temperaturfühlern 30; 130 in den Zellenbehältern 14; 114 kann in dem Batterie-Pack 10; 110 ein Temperaturfühler enthalten sein, dessen Widerstandswert über Kontakte am Batterie-Pack 10; 110 von der Elektronik des kontaktierten Ladegerätes, des Elektrowerkzeugs oder von der im Batterie-Pack 10; 110 integrierten elektronischen Schaltung erfasst werden kann.

Statt der Temperaturfühler 30; 130 mit NTC können auch andersartige Temperaturfühler beispielsweise mit positivem Temperaturkoeffizient (z.B. Pt100) verwendet werden.

Gegebenenfalls kann in dem Batterie-Pack 10; 110 eine elektronische Einzelzellenüberwachung oder Überwachung von Zwischenspannungen erfolgen, die über eine Schnittstelle mit dem angeschlossenen Ladegerät oder Elektrowerkzeug kommuniziert und bei Erkennung von Überspannung oder Unterspannung die Stromzufuhr oder Stromentnahme auf Seiten des Ladegerätes oder des Elektrowerkzeugs unterbricht.

## Patentansprüche

1. Batterie-Pack (10; 110) zur Stromversorgung eines Elektrowerkzeuges, mit einer Mehrzahl von elektrisch miteinander verschalteten Zellen (12; 112) zur Energiespeicherung, wobei die Zellen (12; 112) weiche elektrochemische Polymerzellen, insbesondere Lithiumionen-Polymerzellen oder Lithium-Polymerzellen mit einer flexiblen, in sich nicht formstabilen Zellenhülle sind, **dadurch gekennzeichnet, dass** die Zellen (12; 112) einzeln oder in Gruppen in einem festen, vorzugsweise quaderförmigen Zellenbehälter (14; 114) oder einem offenen Mantel angeordnet sind und der Zellenbehälter (14; 114) wenigstens ein Überdruckschutzmittel, insbesondere ein Überdruckventil (28; 128) und/oder Sollbruchstelle (26; 126), aufweist, wobei der Zellenbehälter (14; 114) wenigstens ein elektrisches/elektronisches Schutzmittel aufweist, das mit dem Überdruckschutzmittel funktionell zusammenwirkt.

2. Batterie-Pack nach Anspruch 1, **dadurch gekennzeichnet, dass** die Zellen (12; 112) stapelweise angeordnet und in Serie oder parallel oder als Kombination von Serien- und Parallelschaltungen geschaltet sind.

3. Batterie-Pack nach einem der vorangegangenen Ansprüche, **dadurch gekennzeichnet, dass** der Zellenbehälter (14; 114) wenigstens zu einem Teil aus einem insbesondere brandhemmenden und hitzebeständigen Kunststoff ist.

4. Batterie-Pack nach einem der vorangegangenen Ansprüche, **dadurch gekennzeichnet, dass** der Zellenbehälter (14; 114) wenigstens ein elektrisches/elektronisches Schutzmittel, insbesondere einen Temperatursensor (30; 130) und/oder eine Stromunterbrechungseinheit, vorzugsweise eine Sicherung (44; 144), aufweist.

5. Elektrowerkzeug mit mindestens einem Batterie-Pack (10; 110) zur Stromversorgung eines Elektrowerkzeuges mit einer Mehrzahl von elektrisch miteinander verschalteten Zellen (12; 112) nach einem der vorhergehenden Ansprüche.

## Claims

1. Battery pack (10; 110) for supplying power to an electric tool, having a plurality of cells (12; 112), which are electrically connected to one another, for storing energy, wherein the cells (12; 112) are soft electrochemical polymer cells, in particular lithium-ion polymer cells or lithium polymer cells having a flexible cell sleeve which is inherently not dimensionally stable, **characterized in that** the cells (12; 112) are arranged individually or in groups in a solid, preferably cuboidal, cell container (14; 114) or an open casing, and the cell container (14; 114) has at least one overpressure-protection means, in particular an overpressure valve (28; 128) and/or predetermined breaking point (26; 126), wherein the cell container (14; 114) has at least one electrical/electronic protection means which functionally interacts with the overpressure-protection means.

2. Battery pack according to Claim 1, **characterized in that** the cells (12; 112) are arranged in a stacked manner and are connected in series or in parallel or as a combination of series and parallel circuits.

3. Battery pack according to either of the preceding claims, **characterized in that** the cell container (14; 114) is at least partly composed of an, in particular, flame-retardant and heat-resistant plastic.

4. Battery pack according to one of the preceding claims, **characterized in that** the cell container (14; 114) has at least one electrical/electronic protection means, in particular a temperature sensor (30; 130) and/or a current-interruption unit, preferably a fuse (44; 144).

5. Electric tool having at least one battery pack (10; 110) for supplying power to an electric tool, having a plurality of cells (12; 112), which are electrically connected to one another, according to one of the preceding claims.

## Revendications

1. Ensemble de batterie (10; 110) destiné à alimenter en courant un appareil électrique et présentant plusieurs cellules (12; 112) raccordées électriquement les unes aux autres pour accumuler de l'énergie,
les cellules (12; 112) étant des cellules électrochimiques polymères malléables, en particulier des cellules polymères à ions lithium ou des cellules polymères au lithium dotées d'une enveloppe flexible intrinsèquement déformable,
**caractérisé en ce que**
les cellules (12; 112) sont disposées séparément ou en groupes dans un récipient (14; 114) à cellules solide et de préférence de forme parallélépipédique, ou dans une enveloppe ouverte,
**en ce que** le récipient (14; 114) à cellules présente au moins un moyen de protection contre les surpressions, notamment une soupape (28; 128) contre les surpressions et/ou un emplacement (26; 126) de rupture préférentielle et
**en ce que** le récipient (14; 114) à cellules présente au moins un moyen de protection électrique et/ou électronique qui coopère fonctionnellement avec le moyen de protection contre les surpressions.

2. Ensemble de batterie selon la revendication 1, **caractérisé en ce que** les cellules (12; 112) sont disposées en empilement et sont raccordées en série, en parallèle ou en combinaison de raccordements en série et en parallèle.

3. Ensemble de batterie selon l'une des revendications précédentes, **caractérisé en ce que** le récipient (14; 114) à cellules est constitué au moins en partie d'une matière synthétique en particulier retardant les flammes et résistant à la chaleur.

4. Ensemble de batterie selon l'une des revendications précédentes, **caractérisé en ce que** le récipient (14; 114) à cellules présente au moins un moyen de protection électrique et/ou électronique, notamment une sonde de température (30; 130) et/ou une unité d'interruption de courant, et de préférence un disjoncteur (44; 144).

5. Outil électrique doté d'au moins un ensemble de batterie (10; 110) qui alimente en courant l'outil électrique et qui présente plusieurs cellules (12; 112) raccordées électriquement les unes aux autres et selon l'une des revendications précédentes.
